# EUROPÄISCHE PATENTSCHRIFT

(11) **EP 2 939 959 B1**
(45) Veröffentlichungstag und Bekanntmachung des Hinweises auf die Patenterteilung: **30.05.2018**
(21) Anmeldenummer: 15156459.8
(22) Anmeldetag: 25.02.2015
(51) Int. Cl.: B65G 47/64, B65G 57/22, B65G 47/08

(54) **PALETTIERVORRICHTUNG FÜR EIN STAPELN VON GEFÜLLTEN SÄCKEN**
PALLETIZING DEVICE FOR STACKING FILLED BAGS
DISPOSITIF DE PALETTISATION POUR UN EMPILEMENT DE SACS PLEINS

(30) Priorität: 28.04.2014 DE 102014105933
(43) Veröffentlichungstag der Anmeldung: 04.11.2015
(73) Patentinhaber: Windmöller & Hölscher KG, 49525 Lengerich (DE)
(72) Erfinder: Kölker, Martin, 49477 Ibbenbüren (DE); Ahlers, Ralf, 49525 Lengerich (DE)

(56) Entgegenhaltungen:
- EP-A1- 0 780 327
- GB-A- 2 291 393
- US-A- 3 294 257

## Beschreibung

Die vorliegende Erfindung betrifft eine Palettiervorrichtung für ein Stapeln von Lagen aus wenigstens zwei Reihen von gefüllten Säcken zu einem Sackstapel.

Es ist bekannt, dass Palettiervorrichtungen eingesetzt werden, um gefüllte Säcke in Lagen aufeinanderzuschichten und einen Sackstapel auszubilden. Ein solcher Sackstapel kann z. B. auf einer Palette ausgebildet werden, so dass er nachfolgend mit Hilfe der Palette transportierbar ist. Der Transport kann dabei zu einer Lagerstelle erfolgen, an welcher der Sackstapel auf der Palette gelagert oder zumindest zwischengelagert wird. Um den Sackstapel zu erzeugen, sind bekannte Palettiervorrichtungen üblicherweise mit einer Schiebevorrichtung und einer Zufuhrvorrichtung ausgestattet. Die Zufuhrvorrichtung führt gefüllte Säcke auf die Schiebefläche der Schiebevorrichtung zu, so dass dort die entsprechende Lage ausgebildet wird. Dabei ist entscheidend, dass es eine Übergabestelle gibt, auf welcher der jeweilig gefüllte Sack die Zufuhrvorrichtung verlässt und auf der Schiebefläche angelangt. Diese Position kann auch als Zufuhrposition der Zufuhrvorrichtung für den gefüllten Sack definiert werden. Um jedoch nachfolgend die entsprechende Lage, insbesondere das definierte Lagebild, auf der Schiebevorrichtung, insbesondere auf der Schiebefläche, zu erhalten, muss eine Weiterbewegung des gefüllten Sacks aus dieser Zufuhrposition in eine Schiebeposition erfolgen. Bei dieser Schiebeposition handelt es sich insbesondere um die finale Position im definierten Lagebild dieser Lage. Diese Weiterbewegung zwischen Zufuhrposition und Schiebeposition kostet Zeit und entsprechenden Aufwand. Insbesondere der Zeitbedarf für diese Bewegung ist nachteilhaft für die Gesamtdauer des Palettiervorgangs. Üblicherweise ist bei bekannten Palettiervorrichtungen das Zufuhrband seitlich neben der Schiebefläche angeordnet. Dies führt dazu, dass ein entsprechender Zufuhrabstand relativ groß ausgebildet ist, da der gefüllte Sack am Ende der Zufuhrvorrichtung noch komplett in die Schiebevorrichtung eingebracht werden muss. Durch diese große Länge, also den großen Zufuhrabstand zwischen der Zufuhrposition und der Schiebeposition, wird ein hoher Zeitbedarf notwendig, welcher sich nachteilig auf den Zeitbedarf für den gesamten Palettiervorgang auswirkt. US 3,294,257 offenbart eine solche Palettiervorrichtung, gemäß dem Oberbegriff des Anspruchs 1. Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Palettierdauer mit einer erfindungsgemäßen Palettiervorrichtung zu reduzieren.

Voranstehende Aufgabe wird gelöst durch eine Palettiervorrichtung mit den Merkmalen des Anspruchs 1. Weitere Merkmale und Details der Erfindung ergeben sich aus den Unteransprüchen, der Beschreibung und den Zeichnungen. Dabei gelten Merkmale und Details, die im Zusammenhang mit der Palettiervorrichtung gemäß Anspruch 1 beschrieben sind, selbstverständlich auch im Zusammenhang mit der Palettiervorrichtung gemäß den Unteransprüchen und jeweils umgekehrt, so dass bezüglich der Offenbarung zu den einzelnen Erfindungsaspekten stets wechselseitig Bezug genommen wird bzw. werden kann. Eine erfindungsgemäße Palettiervorrichtung dient dem Stapeln von Lagen aus wenigstens zwei Reihen von gefüllten Säcken zu einem Sackstapel. Hierfür weist die erfindungsgemäße Palettiervorrichtung eine Schiebevorrichtung mit einer Schiebefläche für das Ausbilden einer Lage gefüllter Säcke auf. Weiter ist eine Zufuhrvorrichtung mit zumindest einem Zufuhrband für die Zufuhr gefüllter Säcke in eine Zufuhrposition auf der Schiebefläche vorgesehen. Dabei weist die Schiebevorrichtung einen Schiebetisch neben der Schiebefläche und einen Schieber für ein Schieben der gefüllten Säcke aus einer Schiebeposition auf der Schiebefläche auf den Schiebetisch auf. Eine erfindungsgemäße Palettiervorrichtung zeichnet sich dadurch aus, dass das Zufuhrband derart ausgebildet ist, dass der Zufuhrabstand zwischen der Zufuhrposition und der Schiebeposition kleiner ist als ein Schiebeabstand zwischen der Schiebeposition und einem Rahmen der Schiebevorrichtung am Zufuhrende des Zufuhrbandes.

Eine erfindungsgemäße Palettiervorrichtung zielt also auf die geometrische Korrelation zwischen der Zufuhrposition und der Schiebeposition ab. Insbesondere wird durch die erfindungsgemäße Ausbildung der Zufuhrvorrichtung und insbesondere des Zufuhrbandes ein Hineinragen des Zufuhrbandes in den Rahmen der Schiebevorrichtung und damit auch in den Rahmen der Palettiervorrichtung möglich. Der Zufuhrabstand ist dementsprechend geringer ausgebildet als der Schiebeabstand, so dass die Zufuhrposition des gefüllten Sacks sich ebenfalls komplett innerhalb des Rahmens der Schiebevorrichtung befindet. Im Vergleich zu bekannten Palettiervorrichtungen, bei welchen üblicherweise der Zufuhrabstand größer als der Schiebeabstand ist und sich dementsprechend das Zufuhrband außerhalb der Schiebevorrichtung und auch außerhalb der Palettiervorrichtung befindet, kann auf diese Weise der notwendige Bewegungsweg zwischen der Zufuhrposition und der Schiebeposition deutlich minimiert werden. Die Reduktion des Bewegungsweges führt zu einem reduzierten Zeitbedarf für diese Bewegung, so dass an dieser Schlüsselstelle eingesparte Zeit zu deutlich reduzierter Gesamtzeit für den gesamten Palettiervorgang führt. Insbesondere handelt es sich bei der Übergabe von der Zufuhrposition in die Schiebeposition um ein zeitliches Bottleneck bei der gesamten Palettiervorrichtung.

Erfindungsgemäß ist unter den gefüllten Säcken ein Element zu verstehen, welches insbesondere ein Kunststoffsack, ein Gewebesack, ein Vliessack oder Ähnliches darstellt, welches z. B. mit einem Schüttgut befüllt wurde. Die Säcke werden mit Hilfe des Zufuhrbandes reihenweise in die Schiebevorrichtung eingebracht und zugeführt. In der Schiebevorrichtung und insbesondere auf der Schiebefläche kann nun eine definierte Lage ausgebildet werden, die eine reihenweise Zusammensetzung aus einzelnen Säcken aufweist. Über ein Schieben dieser definiert ausgebildeten Lage auf der Schiebefläche hinüber auf den Schiebetisch kann die Schiebefläche für das Ausbilden der nächsten Lage wieder freigemacht werden. Der Schiebetisch ist vorzugsweise teilbar ausgebildet, so dass er geöffnet werden kann, um die ausgebildete und geschobene Lage nach unten abzulassen. Eine darunter angeordnete Hubvorrichtung oder eine entsprechende Palette kann nun die Lage aufnehmen, so dass schichtweise, Lage für Lage sich der Sackstapel ausbilden kann.

Selbstverständlich kann die Zufuhrvorrichtung auch zwei oder mehr Zufuhrbänder aufweisen, wie dies später noch erläutert wird. Bei dem Verwenden von zwei oder mehr Zufuhrbändern wird insbesondere eine parallele Anordnung der einzelnen Zufuhrbänder zueinander gewählt, so dass parallel die unterschiedlichen Reihen eingebracht werden können. Insbesondere sind dabei alle Zufuhrbänder mit der erfindungsgemäßen Funktionalität ausgestattet, so dass die Zeitreduktion durch die Reduktion des Bewegungsweges zwischen der Zufuhrposition und der Schiebeposition für sämtliche Reihen erzielbar wird.

Im Vergleich zu den bekannten Lösungen ragt also das jeweilige Zufuhrband vorzugsweise durch den Rahmen hindurch in die Palettiervorrichtung bzw. in die Schiebevorrichtung hinein. Die Zufuhrposition rückt damit näher an die Schiebeposition und bringt auf diese Weise die entsprechend beschriebenen erfindungsgemäßen Vorteile mit sich.

Innerhalb der Schiebevorrichtung ist eine weitere Fördervorrichtung vorgesehen sein. So ist es bspw. denkbar, dass ein Schiebeband in der Schiebefläche vorgesehen ist, welches die Bewegung der gefüllten Säcke von der Zufuhrposition in die Schiebeposition übernimmt. Auch andere aktive und/oder passive technische Umsetzungen dieser Bewegung sind selbstverständlich im Rahmen der vorliegenden Erfindung denkbar. Auch kann zumindest abschnittsweise ein Nachschieben durch einen weiteren Sack von der Zufuhrvorrichtung, insbesondere vom Zufuhrband, die Bewegung des gefüllten Sacks aus der Zufuhrposition in die Schiebeposition durchführen oder zumindest teilweise durchführen. Selbstverständlich sind auch zumindest teilweise schwerkraftgeförderte Bewegungsmöglichkeiten im Sinne der vorliegenden Erfindung denkbar, so dass in diesem Bereich eine zumindest teilweise als schiefe Ebene ausgebildete Schiebefläche diese Bewegungsfunktion erfüllen kann. Bei der erfindungsgemäßen Palettiervorrichtung ist der Zufuhrabstand kleiner oder gleich der Hälfte des Schiebeabstands ausgebildet. Darunter ist zu verstehen, dass das Ende des Zufuhrbandes sozusagen zur Hälfte über den Rahmen hinein in die Schiebevorrichtung ragt. Da üblicherweise die Zufuhrbänder auf der Außenseite des Rahmens enden, wird durch diese Lösungen mindestens eine Halbierung der notwendigen Zeit durch eine Halbierung des notwendigen Bewegungsweges zwischen der Zufuhrposition und der Schiebeposition erzielbar. Bei einer Reduktion auf einen Zufuhrabstand von diesem Wert ist insbesondere eine gute Korrelation zwischen technisch erhöhtem Aufwand einerseits und deutlich merklicher Zeitreduktion andererseits erzielbar.

Vorteilhaft ist es weiter, wenn bei einer erfindungsgemäßen Palettiervorrichtung der Zufuhrabstand kleiner oder gleich ca. 400 mm ausgebildet ist. Dies ist als absoluter Wert eine bevorzugte Lösung, um einen ausreichend reduzierten Bewegungsweg und damit eine ausreichend reduzierte Zeit für diese Bewegung zu erlangen. Selbstverständlich ist der Zufuhrabstand dabei immer größer als 0 mm, da ansonsten Zufuhrposition und Schiebeposition miteinander zusammenfallen würden. Je kleiner der Zufuhrabstand ausgebildet ist, umso größer wird der zeitliche Vorteil durch die entsprechend weitere Reduktion des Bewegungsweges zwischen der Zufuhrposition und der Schiebeposition. Vorteilhaft ist es ebenfalls, wenn bei einer erfindungsgemäßen Palettiervorrichtung der Zufuhrabstand zwischen ca. 150 mm und ca. 250 mm, bevorzugt zwischen ca. 180 mm und ca. 220 mm, besonders bevorzugt zwischen ca. 195 mm und ca. 205 mm ausgebildet ist. Bevorzugt ist es, wenn der Zufuhrabstand im Bereich um ca. 200 mm ausgebildet ist. Bei diesen Parameterbereichen ist eine besonders vorteilhafte Korrelation zwischen zusätzlichem konstruktivem Aufwand und hoher zeitlicher Reduktion für den Bewegungsweg zwischen Zufuhrposition und Schiebeposition erzielbar. Damit stellen diese Parameterbereiche Kompromisslösungen dar, welche einen vertretbaren Aufwand für die deutliche Leistungssteigerung mit sich bringen. Bei der erfindungsgemäßen Palettiervorrichtung aufweist die Zufuhrvorrichtung ein Kalibriermittel, insbesondere mit einem Kalibriergewinde, für eine Variation des Zufuhrabstandes. Eine Variation des Zufuhrabstandes erlaubt es, eine erfindungsgemäße Palettiervorrichtung noch flexibler einzusetzen. So kann insbesondere bei besonders zeitkritischen Palettieraufgaben durch die Kalibriermittel eine Reduktion des Zufuhrabstandes für diese Palettieraufgabe erzielt werden. Damit einhergehend wird dementsprechend auch der Zeitverlust für die Bewegung zwischen Zufuhrposition und Schiebeposition reduziert, so dass die gesamte Palettierzeit optimiert werden kann. Die Kalibriermittel für die Variation können dabei z. B. ein Kalibriergewinde aufweisen, welches entweder das gesamte Zufuhrband oder nur das Ende des Zufuhrbandes in der gewünschten Richtung variieren. Der Verstellbereich ist insbesondere in translatorischer Richtung ausgebildet und umfasst z. B. einen Bereich zwischen ±50 mm. Ist also als optimaler Zufuhrabstand ein Wert von 200 mm ausgewählt, so würde dies eine Variationsmöglichkeit zwischen ca. 150 mm und ca. 250 mm ermöglichen. Diese Anpassung kann sowohl manuell durchgeführt werden, als auch durch eine motorische Verstellung, z. B. von einer Gewindespindel. Dabei kann über einen Getriebeabtrieb und eine entsprechende Kupplung auch der Antrieb bzw. die Antriebsvorrichtung des Zufuhrbandes für diese Kalibrierung mit Hilfe der Kalibriermittel eingesetzt werden. Wenn mehr als ein Zufuhrband eingesetzt wird, ist vorzugsweise das Kalibriermittel ausgebildet alle Zufuhrabstände aller Zufuhrbänder gemeinsam und um den gleichen oder im Wesentlichen gleichen Wert zu variieren.

Vorteilhaft ist es ebenfalls, wenn bei einer erfindungsgemäßen Palettiervorrichtung die Zufuhrvorrichtung zumindest zwei Zufuhrbänder, insbesondere im Wesentlichen parallel zueinander angeordnet aufweist, mit einem identischen oder im Wesentlichen identischen Zufuhrabstand. Durch das parallele Anordnen von Zufuhrbändern ist es möglich, zwei oder mehr Reihen von Säcken gleichzeitig auf die Schiebefläche zuzuführen. Dies führt zu einer weiteren Reduktion der gesamten Palettierzeit, die insbesondere mit der erfindungsgemäßen Zeitreduktion durch einen definierten Zufuhrabstand positiv korreliert ist. Die Anzahl der Zufuhrbänder entspricht dabei vorzugsweise der Anzahl der Reihen pro auszubildender Lage. Vor der Zufuhrvorrichtung kann dementsprechend z. B. eine Weiche angeordnet sein, welche von einer gemeinsamen Herstellvorrichtung die entsprechend gefüllten Säcke auf Drehvorrichtungen oder direkt auf die Zufuhrvorrichtung bzw. die Zufuhrbänder verteilt. Die parallele Ausbildung der Zufuhrbänder kann jedoch auch eine Ausführung beinhalten, bei welcher die Zufuhrbänder von zwei unterschiedlichen Seiten auf die Palettiervorrichtung bzw. auf die Schiebevorrichtung zugerichtet sind. Grundsätzlich ist also die Förderrichtung für jedes der Zufuhrbänder frei wählbar.

Ein weiterer Vorteil kann erzielt werden, wenn bei einer erfindungsgemäßen Palettiervorrichtung eine Sensorvorrichtung vorgesehen ist mit Sensormitteln für die Erkennung der gefüllten Säcke in der Zufuhrposition und mit Sensormitteln für die Erkennung der gefüllten Säcke in der Schiebeposition. Damit wird es möglich, eine Parameterrückkopplung für eine Regelstrecke zur Verfügung zu stellen. Insbesondere kann dies für eine Regelung der Zufuhrvorrichtung, wie auch für eine Regelung eines Schiebebandes innerhalb der Schiebevorrichtung eingesetzt werden. Solche Sensorvorrichtungen sind insbesondere als optische Sensorvorrichtungen ausgebildet. So kann z. B. über die Auswertung bildgebender Verfahren eine explizite Positionsbestimmung der gefüllten Säcke durchgeführt werden. In einfacher Weise ist auch das Verwenden von Lasertechnik oder einfacheren Lichtschranken denkbar. Selbstverständlich kann die Sensorvorrichtung die Sensormittel für die Erfassung der Zufuhrposition und für die Erfassung der Schiebeposition auch zusammenfassen, so dass ein einziges gemeinsames Sensormittel für diese Erfassung ausgebildet ist. Die Sensorvorrichtung oder eine entsprechende Kontrollvorrichtung kann dabei direkt erfassend oder rechnerisch ermittelnd auch den Zufuhrabstand definieren, so dass insbesondere in Korrelation mit einer automatisch ausgebildeten Kalibriervorrichtung, wie sie bereits erläutert worden ist, auch eine Regelung einer flexiblen Variationsmöglichkeit des Zufuhrabstandes mit diesen Sensordaten möglich wird.

Vorteilhaft ist es darüber hinaus, wenn bei einer erfindungsgemäßen Palettiervorrichtung die Schiebefläche zumindest ein Schiebeband aufweist für eine Bewegung der gefüllten Säcke aus der Zufuhrposition in die Schiebeposition. Wie bereits an anderer Stelle erläutert worden ist, handelt es sich hierbei um eine aktive Bewegung der gefüllten Säcke entlang des Zufuhrabstandes. Dabei sind selbstverständlich auch zwei oder mehr Schiebebänder denkbar, die diese Funktionalität zur Verfügung stellen. Insbesondere ist für jedes Zufuhrband der Zufuhrvorrichtung ein entsprechendes Schiebeband in der Schiebefläche angeordnet. Dabei ist es denkbar, dass die weiteren Flächen glatt und damit reibungsminimiert ausgebildet sind, um ein Anschieben oder Weiterschieben bzw. ein Weiterdrücken durch Kontaktierung benachbarter gefüllter Säcke besonders einfach und mit wenig Kraftaufwand durchführen zu können.

Vorteilhaft ist es ebenfalls, wenn bei einer erfindungsgemäßen Palettiervorrichtung der Rahmen der Schiebevorrichtung einen Rahmenausschnitt aufweist, durch welchen das Zufuhrende des Zufuhrbandes hindurchragt. Ein solcher Rahmen ist insbesondere eine mechanisch tragende Struktur der Palettiervorrichtung. Durch den Ausschnitt wird eine entsprechende Aussparung zur Verfügung gestellt, durch welche in geometrischer Weise das Ende des Zufuhrbandes hindurchragen kann. Weist die Zufuhrvorrichtung zwei oder mehr Zufuhrbänder auf, so kann die entsprechende Aussparung für den Rahmenausschnitt dem angepasst größer ausgebildet sein. Jedoch sind auch separate einzelne Rahmenausschnitte spezifisch für jedes Zufuhrband im Sinne der vorliegenden Erfindung denkbar. Selbstverständlich kann neben dem Rahmenausschnitt vorzugsweise eine mechanische Versteifung, insbesondere in Form von einer oder mehreren Versteifungsrippen, angeordnet sein, um die Schwächung des Rahmens aus mechanischer Sicht durch diesen Rahmenausschnitt wieder auszugleichen und vorzugsweise vollständig aufzuheben.

Es ist ebenfalls vorteilhaft, wenn bei einer erfindungsgemäßen Palettiervorrichtung unter dem Schiebetisch eine Hubvorrichtung für die Aufnahme des sich ausbildenden Sackstapels angeordnet ist. Dabei kann dieses Aufnehmen sowohl direkterweise ohne Palette als auch über eine Palette erfolgen. Die Hubvorrichtung kann dabei eine translatorische Hubbewegung ausführen, um in erfindungsgemäßer Weise die jeweilige Lage vom Schiebetisch bei dessen Öffnungsbewegung direkt unterhalb des Schiebetisches aufzunehmen. Dies führt zu einer reduzierten Fallhöhe und gleichzeitig zu einer Transportmöglichkeit in translatorischer Höhenbewegungsrichtung für den gesamten Sackstapel. Damit kann das gesamte System mit und ohne Palette ausgeführt werden. Die Hubvorrichtung kann dabei selbstverständlich eine Transportmöglichkeit umfassen, wie z. B. Transportrollen, um nach Beendigung der Stapelaufgabe den gesamten fertigen Sackstapel seitlich hinaustransportieren zu können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: einen durch eine erfindungsgemäße Palettiervorrichtung hergestellten Sackstapel bei Ausbildung der letzten Lage,
- Fig. 2: eine Ausführungsform einer erfindungsgemäßen Palettiervorrichtung,
- Fig. 3: die Ausführungsform der Fig. 2 in einem weiteren Verfahrensstand und
- Fig. 4: die Ausführungsform der Fig. 2 und 3 in einer Detaildarstellung.

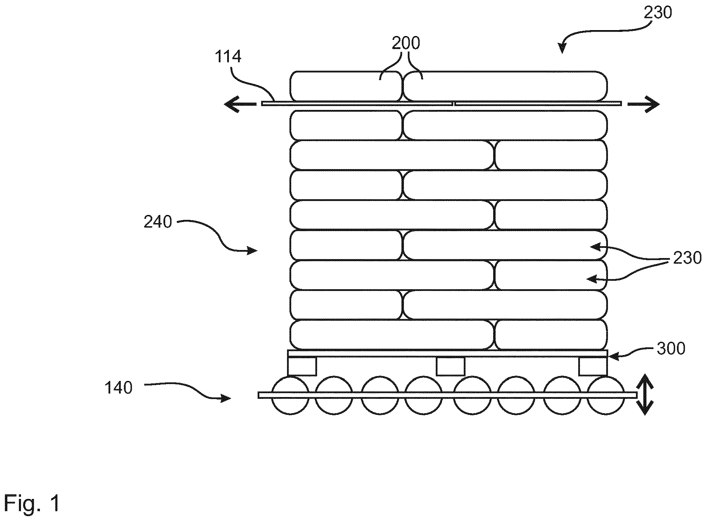

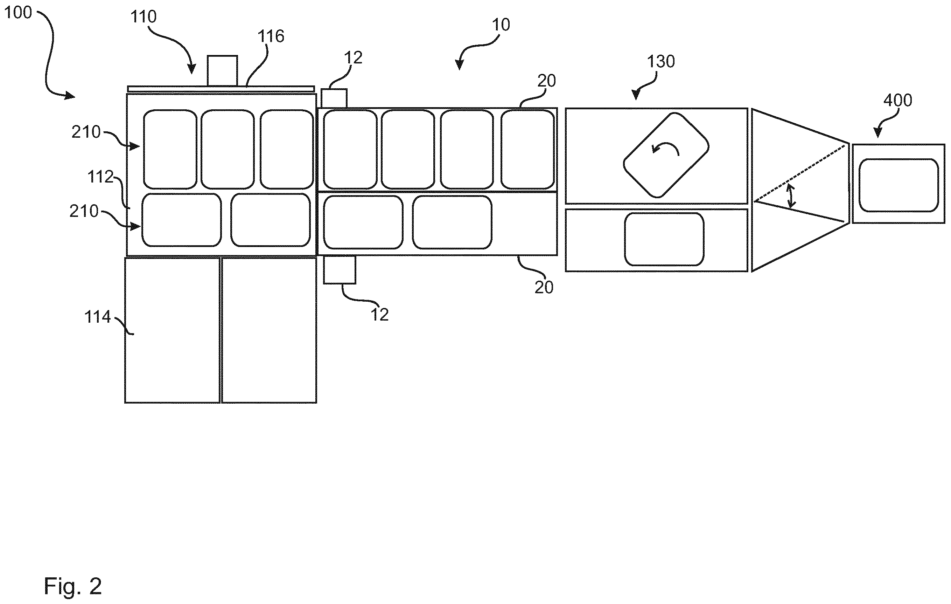

Anhand der Fig. 1 bis 3 wird zuerst grundsätzlich die Funktionalität einer erfindungsgemäßen Palettiervorrichtung erläutert. So ist in Fig. 2 von rechts ausgehend eine Herstellvorrichtung 400 vorgesehen, welche z. B. als sogenannte Form-Fill-and-Seal-Maschine die gefüllten Säcke zur Verfügung stellt. Über eine schematisch dargestellte Weiche kann nun eine Verteilung auf zwei unterschiedliche Zufuhrbänder 20 erfolgen. Diesen Zufuhrbändern 20 vorgelagert ist noch eine Drehvorrichtung 130, um die einzelnen gefüllten Säcke 200 in eine gewünschte unterschiedliche Orientierung bringen zu können. Die Orientierung hängt dabei vom entsprechenden Lagenbild der Lage 230 ab, die in der Schiebevorrichtung 110 auf der Schiebefläche 112 ausgebildet werden soll. Anschließend nach der entsprechenden Drehung in der Drehvorrichtung 130 können die einzelnen Reihen 210 der Säcke 200 über die Zufuhrbänder 20 der Zufuhrvorrichtung 10 nun in die Palettiervorrichtung 100, insbesondere in die Schiebevorrichtung 110, zugeführt werden.

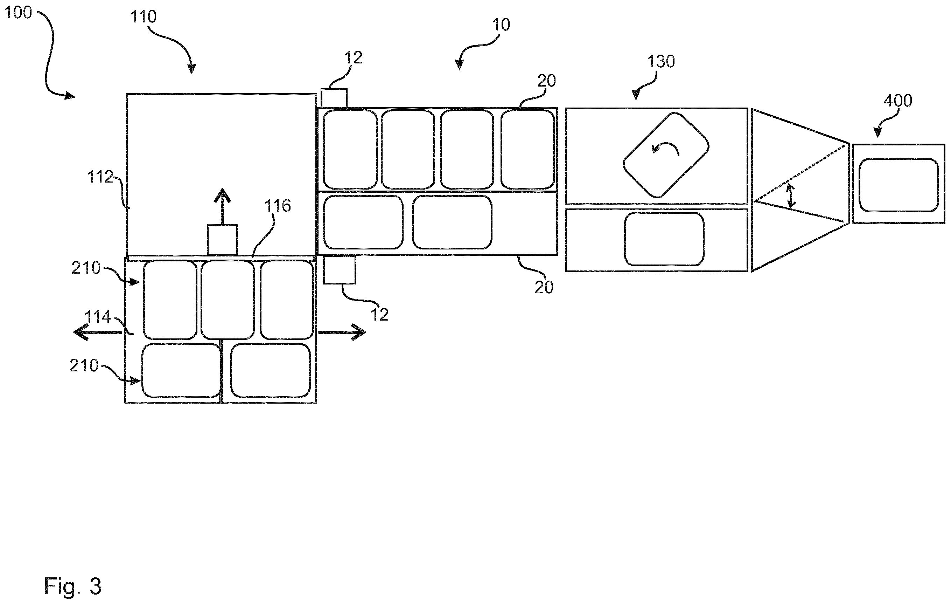

Fig. 2 zeigt eine komplett ausgebildete Lage 230 mit zwei Reihen 210, welche sich bereits in Schiebeposition S auf der Schiebefläche 112 befinden. Anschließend kann ein Schieber 116 die gesamte Lage 230 in Fig. 2 nach unten auf den Schiebetisch 114 schieben. Befindet sich die Lage 230 nun auf dem Schiebetisch 114, wie dies die Fig. 3 und die Fig. 1 zeigen, kann sich der Schieber 116 wieder in seine Ausgangsposition zurückbewegen. Die Schiebefläche 112 ist nun bereit für die Aufnahme der nächsten Reihen 210 der Säcke 200 mit Hilfe der Zufuhrbänder 20. Selbstverständlich ist diese gesamte Funktionalität auch mit nur einem einzigen Zufuhrband 20 in der Zufuhrvorrichtung 10 ausführbar, so dass der Schieber 116 eine Zwischenbewegung für die Ausbildung der jeweiligen Lage 230 auf der Schiebefläche 112 durchführt.

Nach dem Schieben der Lage 230 auf den Schiebetisch 114 öffnet sich dieser, so dass die entsprechende Lage 230 nach unten abgegeben werden kann und mit einer Hubvorrichtung 140 auf einer Palette 300 nach unten bewegbar ist. Auf diese Weise bildet sich schichtweise der gesamte Sackstapel 240 aus.

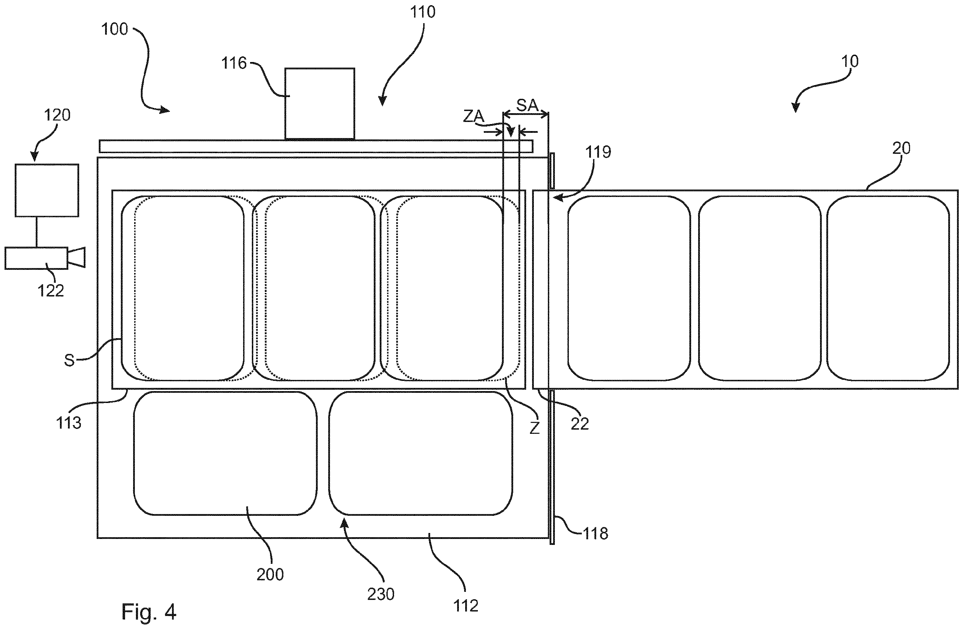

In Fig. 4 ist gut die erfindungsgemäße Funktionalität zu erkennen. Insbesondere ist hier die Korrelation des jeweiligen Zufuhrabstandes ZA und des Schiebeabstandes SA zu erkennen. Über ein Zufuhrband 20 der Zufuhrvorrichtung 10 werden die Säcke 200 in die Schiebevorrichtung 110 zugeführt und in einer Zufuhrposition Z, welche gestrichelt dargestellt ist, abgelegt. Nach dieser Zufuhrbewegung befindet sich die Reihe 210 dieser Säcke 200 in der gestrichelten Position gemäß Fig. 4. Nun weist die Schiebefläche 112 dieser Ausführungsform der Schiebevorrichtung 110 ein Schiebeband 113 auf, welches für die Weiterbewegung von der Zufuhrposition Z in die Schiebeposition S (mit durchgezogenen Linien dargestellt) vorgesehen ist. Sobald dies erfolgt ist, kann die bereits beschriebene Schiebebewegung mit dem Schieber 116 und die weitere Palettierung erfolgen.

Wie gut zu erkennen ist, weist ein Rahmen 118 an der rechten Seite der Schiebevorrichtung 110 eine Aussparung 119 auf, durch welche hindurch das Ende 22 des Zufuhrbandes 20 hindurchragt. Dieses Zufuhrende führt nun dazu, dass die Zufuhrposition Z im Vergleich zu einer Anordnung des Zufuhrbandes 20 außerhalb des Rahmens 118 nach links versetzt angeordnet wird. Damit reduziert sich auch der Zufuhrabstand ZA auf den Wert, wie er in der Fig. 4 zu erkennen ist. Insbesondere reduziert sich der Zufuhrabstand ZA in Korrelation auf den Schiebeabstand SA auf einen geringeren Wert als dieser Schieberabstand SA. Wie gut zu erkennen ist, definiert der Zufuhrabstand ZA den notwendigen Bewegungsweg zwischen der Zufuhrposition Z und der Schiebeposition S. Durch die erfindungsgemäße Reduktion wird dieser Weg verkleinert, so dass sich dementsprechend auch die zugehörige Zeit für diese Bewegung über den Zufuhrabstand ZA reduzieren lässt. Da es sich hierbei üblicherweise um einen zeitkritischen Faktor beim gesamten Palettiervorgang handelt, wird damit die gesamte Palettiervorrichtung 100 hinsichtlich des durchgeführten Palettiervorgangs beschleunigt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Zufuhrvorrichtung
- 12: Kalibriermittel
- 20: Zufuhrband
- 22: Zufuhrende

- 100: Palettiervorrichtung
- 110: Schiebevorrichtung
- 112: Schiebefläche
- 113: Schiebeband
- 114: Schiebetisch
- 116: Schieber
- 118: Rahmen
- 119: Rahmenausschnitt
- 120: Sensorvorrichtung
- 122: Sensormittel
- 130: Drehvorrichtung
- 140: Hubvorrichtung

- 200: Sack
- 210: Reihe
- 230: Lage
- 240: Sackstapel

- 300: Palette
- 400: Herstellvorrichtung

- S: Schiebeposition
- SA: Schiebeabstand
- Z: Zufuhrposition
- ZA: Zufuhrabstand

## Patentansprüche

1. Palettiervorrichtung (100) für ein Stapeln von Lagen (230) aus wenigstens zwei Reihen (210) von gefüllten Säcken (200) zu einem Sackstapel (240), aufweisend eine Schiebevorrichtung (110) mit einem Rahmen (118) und einer Schiebefläche (112) für das Ausbilden einer Lage (230) gefüllter Säcke (200) und eine Zufuhrvorrichtung (10) mit zumindest einem Zufuhrband (20) für die Zufuhr gefüllter Säcke (200) in eine Zufuhrposition (Z) auf der Schiebefläche (112), wobei die Schiebevorrichtung (110) einen Schiebetisch (114) neben der Schiebefläche (112) und einen Schieber (116) für ein Schieben der gefüllten Säcke (200) aus einer Schiebeposition (S) auf der Schiebefläche (112) auf den Schiebetisch (114) aufweist,
**dadurch gekennzeichnet, dass**
die Schiebefläche (112) zumindest eine Fördervorrichtung (113) aufweist für eine Bewegung der gefüllten Säcke (200) aus der Zufuhrposition (Z) in die Schiebeposition (S),
wobei das Zufuhrband (20) derart ausgebildet ist, dass ein Zufuhrabstand (ZA) zwischen der Zufuhrposition (Z) und der Schiebeposition (S) kleiner ist als ein Schiebeabstand (SA) zwischen der Schiebeposition (S) und dem Rahmen (118) der Schiebevorrichtung (110) am Zufuhrende (22) des Zufuhrbandes (20),
wobei das Zufuhrband (20) über den Rahmen (118) der Schiebevorrichtung (110) in die Schiebevorrichtung (110) hineinragt, oder der Rahmen (118) der Schiebevorrichtung (110) einen Rahmenausschnitt (119) aufweist, durch welchen das Zufuhrende (22) des Zufuhrbandes (20) hindurchragt,
wobei die Zufuhrvorrichtung (10) ein Kalibriermittel (12) aufweist für eine Variation des Zufuhrabstandes (ZA).

2. Palettiervorrichtung (100) nach Anspruch 1,
**dadurch gekennzeichnet, dass**
der Zufuhrabstand (ZA) kleiner oder gleich der Hälfte des Schiebeabstands (SA) ausgebildet ist.

3. Palettiervorrichtung (100) nach einem der vorangegangenen Ansprüche,
**dadurch gekennzeichnet, dass**
der Zufuhrabstand (ZA) kleiner oder gleich ca. 400 mm ausgebildet ist.

4. Palettiervorrichtung (100) nach einem der vorangegangenen Ansprüche,
**dadurch gekennzeichnet, dass**
der Zufuhrabstand (ZA) zwischen ca. 150 mm und ca. 250 mm, bevorzugt zwischen ca. 180 mm und ca. 220 m, besonders bevorzugt zwischen ca. 195 mm und ca. 205 mm ausgebildet ist.

5. Palettiervorrichtung (100) nach einem der vorangegangenen Ansprüche,
**dadurch gekennzeichnet, dass**
das Kalibriermittel (12) ein Kalibriergewinde aufweist.

6. Palettiervorrichtung (100) nach einem der vorangegangenen Ansprüche,
**dadurch gekennzeichnet, dass**
die Zufuhrvorrichtung (10) zumindest zwei Zufuhrbänder (20), insbesondere im Wesentlichen parallel zueinander angeordnet, aufweist mit einem identischen oder im Wesentlichen identischen Zufuhrabstand (ZA).

7. Palettiervorrichtung (100) nach einem der vorangegangenen Ansprüche,
**dadurch gekennzeichnet, dass**
eine Sensorvorrichtung (120) vorgesehen ist mit Sensormitteln (122) für die Erkennung der gefüllten Säcke (200) in der Zufuhrposition (Z) und mit Sensormitteln (122) für die Erkennung der gefüllten Säcke (200) in der Schiebeposition (S).

8. Palettiervorrichtung (100) nach einem der vorangegangenen Ansprüche,
**dadurch gekennzeichnet, dass**
die Fördervorrichtung ein Schiebeband (113) ist.

9. Palettiervorrichtung (100) nach einem der vorangegangenen Ansprüche,
**dadurch gekennzeichnet, dass**
unter dem Schiebetisch (114) eine Hubvorrichtung (140) für die Aufnahme des sich ausbildenden Sackstapels (240) angeordnet ist.

## Claims

1. A palletizing device (100) for a stacking of layers (230) of at least two rows (210) of filled bags (200) into a stack of bags (240), having a slider device (110) with a frame (118) and a sliding surface (112) for the formation of a layer (230) of filled bags (200) and a feeding device (10) with at least one feed belt (20) for the feeding of filled bags (200) into a feed position (Z) on the sliding surface (112), wherein the slider device (110) has a sliding table (114) next to the sliding surface (112) and a slider (116) for a sliding of the filled bags (200) from a sliding position (S) on the sliding surface (112) onto the sliding table (114),
**characterized in that**
the sliding surface (112) has at least one conveying device (113) for a movement of the filled bags (200) from the feed position (Z) into the sliding position (S),
wherein the feed belt (20) is designed in such a manner that a feed distance (ZA) between the feed position (Z) and the sliding position (S) is less than a sliding distance (SA) between the sliding position (S) and the frame (118) of the slider device (110) on the feed end (22) of the feed belt (20),
wherein the feed belt (20) protrudesbeyond the frame (118) of the slider device (110) into the slider device (110), or the frame (118) of the slider device (110) has a frame section (119) through which the feed end (22) of the feed belt (20) protrudes, wherein the feeding device (10) has a calibration means (12) for a variation of the feed distance (ZA).

2. A palletizing device (100) according to Claim 1,
**characterized in that**
the feed distance (ZA) is designed less than or equal to half of the sliding distance (SA).

3. A palletizing device (100) according to any one of the preceding claims,
**characterized in that**
the feed distance (ZA) is designed less than or equal to approx. 400 mm.

4. A palletizing device (100) according to any one of the preceding claims,
**characterized in that**
the feed distance (ZA) is designed between approx. 150 mm and approx. 250 mm, preferably between approx. 180 mm and approx. 220 mm, particularly preferably between approx. 195 mm and approx. 205 mm.

5. A palletizing device (100) according to any one of the preceding claims,
**characterized in that**
the calibration means (12) has a calibration thread.

6. A palletizing device (100) according to any one of the preceding claims,
**characterized in that**
the feeding device (10) has at least two feed belts (20), in particular arranged substantially parallel to each other with an identical or substantially identical feed distance (ZA).

7. A palletizing device (100) according to any one of the preceding claims,
**characterized in that**
a sensor device (120) is provided with sensor means (122) for the detection of the filled bags (200) in the feed position (Z) and with sensor means (122) for the detection of the filled bags (200) in the sliding position (S).

8. A palletizing device (100) according to any one of the preceding claims,
**characterized in that**
the conveying device is a sliding belt (113).

9. A palletizing device (100) according to any one of the preceding claims,
**characterized in that**
under the sliding table (114) a lifting device (140) is arranged for the intake of the forming stack of bags (240).

## Revendications

1. Dispositif de palettisation (100) pour un empilement de couches (230) d'au moins deux rangées (210) de sacs (200) remplis pour former une pile de sacs (240), présentant un dispositif de poussée (110) avec un cadre (118) et une surface de poussée (112) pour la constitution d'une couche (230) de sacs (200) remplis et un dispositif d'acheminement (10) avec au moins une bande d'acheminement (20) pour l'acheminement de sacs (200) remplis dans une position d'acheminement (Z) sur la surface de poussée (112), le dispositif de poussée (110) présentant une table de poussée (114) à côtéde la surface de poussée (112) et un pousseur (116) pour pousser les sacs (200) remplis à partir d'une position de poussée (S) sur la surface de poussée (112) vers la table de poussée (114),
**caractérisé en ce que**
la surface de poussée (112) présente au moins un dispositif de transport (113) pour un mouvement des sacs (200) remplis à partir de la position d'acheminement (Z) vers la position de poussée (S),
la bande d'acheminement (20) étant constituée de telle sorte qu'une distance d'acheminement (ZA) entre la position d'acheminement (Z) et la position de poussée (S) est inférieur à une distance de poussée(SA) entre la position de poussée (S) et le cadre (118) du dispositif de poussée (110) à l'extrémité d'acheminement (22) de la bande d'acheminement (20),
la bande d'acheminement (20) dépassant du cadre (118) du dispositif de poussée (110) vers l'intérieur du dispositif de poussée (110), ou le cadre (118) du dispositif de poussée (110) présentant une découpe de cadre (119) à travers laquelle dépasse l'extrémité d'acheminement (22) de la bande d'acheminement (20),
le dispositif d'acheminement (10) présentant un moyen d'étalonnage (12) pour une variation de la distance d'acheminement (ZA).

2. Dispositif de palettisation (100) selon la revendication 1,
**caractérisé en ce que**
la distance d'acheminement (ZA) est inférieure ou égale à la moitié de la distance de poussée (SA).

3. Dispositif de palettisation (100) selon l'une des revendications précédentes,
**caractérisé en ce que**
la distance d'acheminement (ZA) est inférieure ou égale à environ 400 mm.

4. Dispositif de palettisation (100) selon l'une des revendications précédentes,
**caractérisé en ce que**
la distance d'acheminement (ZA) est comprise entre environ 150 mm et environ 250 mm, de préférence entre environ 180 mm et environ 220 mm, de façon particulièrement préférée entre environ 195 mm et environ 205 mm.

5. Dispositif de palettisation (100) selon l'une des revendications précédentes,
**caractérisé en ce que**
le moyen d'étalonnage (12) présente un filetage d'étalonnage.

6. Dispositif de palettisation (100) selon l'une des revendications précédentes,
**caractérisé en ce que**
le dispositif d'acheminement (10) présente au moins deux bandes d'acheminement (20), en particulier disposées de façon essentiellement parallèle entre elles, avec une distance d'acheminement (ZA) identique ou essentiellement identique.

7. Dispositif de palettisation (100) selon l'une des revendications précédentes,
**caractérisé en ce**
**qu'**il est prévu un dispositif de capteur (120) avec des moyens de capteur (122) pour la détection des sacs (200) remplis dans la position d'acheminement (Z), et avec des moyens de capteur (122) pour la détection des sacs (200) remplis dans la position de poussée (S).

8. Dispositif de palettisation (100) selon l'une des revendications précédentes,
**caractérisé en ce que**
le dispositif d'acheminement est une bande de poussée (113).

9. Dispositif de palettisation (100) selon l'une des revendications précédentes,
**caractérisé en ce que,**
sous la table de poussée (114), il est disposé un dispositif de levage (140) pour la réception de la pile de sacs (240) qui se constitue.
